# EUROPEAN PATENT APPLICATION

(11) **EP 1 898 388 A2**
(43) Date of publication of application: **12.03.2008**
(21) Application number: 07003969.8
(22) Date of filing: 27.02.2007
(51) Int. Cl.: G09G 3/20

(54) **Portable terminal capable of digital broadcast reception and horizontal image display method**

(30) Priority: 08.09.2006 KR 20060087083
(71) Applicant: Samsung Electronics Co., Ltd., Suwon-si, Gyeonggi-Do (KR)
(72) Inventor: Na, Sang Woo, Suwon-si, Gyeonggi-do (KR)
(74) Representative: Boakes, Jason Carrington

(57) **Abstract**

A portable terminal capable of digital broadcast reception and a horizontal image display method for the same are disclosed. The horizontal image display method includes receiving a digital broadcast signal and extracting a video image from the received digital broadcast signal; checking whether a horizontal image display feature is enabled; calculating, if the horizontal image display feature is enabled, a rotated angle θ of a screen relative to the ground; and rotating the extracted video image through -θ degrees and displaying the rotated video image on the screen. As a result, video images in digital broadcasts are displayed parallel to the ground without regard to rotated angles of the display screen. Both right-handed and left-handed users can conveniently view digital broadcasts with identical portable terminals.

## Description

### BACKGROUND OF THE INVENTION

### 1. Field of the Invention

The present invention relates generally to a portable terminal and, more particularly, to a portable terminal capable of digital broadcast reception and a horizontal image display method that enable video images in digital broadcasts to be displayed horizontally regardless of a rotated angle of the display screen relative to the ground.

### 2. Description of the Related Art

In digital broadcasting, a broadcasting station broadcasts a digitally modulated multimedia signal including audio, video and text. Broadcast receivers receive and reproduce the broadcast multimedia signal. Digital Multimedia Broadcasting (DMB) and Digital Video Broadcasting (DVB) are examples of digital broadcasting. The DMB may be divided into terrestrial DMB or satellite DMB.

Recently, to extend multimedia features, advanced portable terminals, such as mobile communication terminals, notebooks and Personal Digital Assistants (PDAs), have been equipped with digital broadcast receivers.

A slide type or folder type portable terminal capable of digital broadcast reception has a rectangular display screen. During call processing, the portable terminal is used in a state where shorter sides of the display screen are parallel to the ground. During digital broadcast reception, the portable terminal is used in a state where longer sides of the display screen are parallel to the ground. That is, video images in digital broadcasts are rectangular and longer sides of the video images are parallel to the ground. The portable terminal displays video images in a manner that the longer sides of the video images correspond to the longer sides of the display screen. Hence, to view a digital broadcast with a portable terminal, the user rotates the portable terminal 90 degrees counterclockwise so that longer sides of the display screen are parallel to the ground.

To rotate the portable terminal counterclockwise and view a digital broadcast, the user holds the main body other than the display screen of the portable terminal. Whereas a right-handed user can view digital broadcasts without much difficulty, a left-handed user may experience considerable inconvenience in viewing digital broadcasts. When the portable terminal is placed so that shorter sides of the display screen are parallel to the ground, video images are displayed perpendicular to the ground, making it difficult to view a digital broadcast. Further, when an incoming call arrives during digital broadcast reception, the user is inconvenienced by having to rotate the portable terminal 90 degrees clockwise for answering the call.

To solve these problems, a swing type portable terminal whose display unit having a screen is rotatable separately from the main body has been developed. However, the swing type portable terminal includes a physical rotating mechanism between the main body and display unit for rotating the display unit separately from the main body. Hence, the size of a swing type portable terminal is normally greater than that of a slide type or folder type portable terminal.

### SUMMARY OF THE INVENTION

The present invention has been made in view of the above problems, and an object of the present invention is to provide a portable terminal and horizontal image display method that enable both right-handed and left-handed users to conveniently view digital broadcasts with the same portable terminal.

Another object of the present invention is to provide a portable terminal and horizontal image display method that enable digital broadcasts to be viewed horizontally regardless of a rotated angle of the display screen of the portable terminal relative to the ground or horizon.

Another object of the present invention is to provide a portable terminal and horizontal image display method that enable a digital broadcast to be viewed in a state where shorter sides of the display screen are parallel to the ground.

In accordance with the present invention, there is provided a horizontal image display method for a portable terminal capable of digital broadcast reception, including receiving a digital broadcast signal and extracting a video image from the received digital broadcast signal; and displaying the extracted video image parallel to the ground on a screen without regard to an attitude of the screen relative to the ground.

The displaying step may include calculating a rotated angle θ of the screen relative to the ground; and rotating the extracted video image through -θ and displaying the rotated video image on the screen as an on-screen image.

Preferably, the rotated angle θ of the screen is calculated using angular velocity data of the screen measured by a gyro sensor.

Preferably, the on-screen image has a width-to-height ratio equal to that of the extracted video image. More preferably, the on-screen image is made as large as possible within the screen, or is made as large as possible within a rectangular area on the screen.

Alternatively, the on-screen image corresponds to an unreduced form of the extracted video image and a portion not fitting within the screen is cut off. Alternatively, the on-screen image corresponds to a reduced form of the extracted video image at a preset ratio and a portion of the reduced form not fitting within the screen is cut off. Preferably, the center of the extracted video image coincides with the center of the screen.

In accordance with the present invention, there is also provided a horizontal image display method for a portable terminal capable of digital broadcast reception, including receiving a digital broadcast signal and extracting a video image from the received digital broadcast signal; checking whether a horizontal image display feature is enabled; calculating, if the horizontal image display feature is enabled, a rotated angle θ of a screen relative to the ground; and rotating the extracted video image through -θ and displaying the rotated video image on the screen as an on-screen image.

The horizontal image display method may further include displaying, if the horizontal image display feature is not enabled, the extracted video image on the screen without modification.

Preferably, when longer sides of the rectangular screen are parallel to the ground, the on-screen image completely fills the screen. When shorter sides of the screen are parallel to the ground, the on-screen image corresponds to a reduced form of the extracted video image while preserving of a width-to-height ratio of the extracted video image that is made as large as possible within the screen.

In accordance with the present invention, there is further provided a portable terminal capable of digital broadcast reception, including a display unit having a screen for displaying images; a broadcast receiving unit for receiving a digital broadcast signal; an angle calculator for calculating a rotated angle θ of the screen relative to the ground; a signal processor for extracting a video image from the received digital broadcast signal, rotating the extracted video image through -θ, and displaying the rotated video image on the screen as an on-screen image.

The portable terminal may further include a gyro sensor for measuring an angular velocity of the screen, and the angle calculator calculates the rotated angle θ using angular velocity data measured by the gyro sensor.

### BRIEF DESCRIPTION OF THE DRAWINGS

The above and other objects, features and advantages of the present invention will be more apparent from the following detailed description in conjunction with the accompanying drawings, in which:
FIG. 1 illustrates a configuration of a portable terminal capable of digital broadcast reception according to the present invention;
FIG. 2 shows a front view of the portable terminal of FIG. 1;
FIG. 3 is a flow chart illustrating a first horizontal image display method according to the present invention;
FIG. 4 is a flow chart illustrating a display mode setting procedure in the method of FIG. 3;
FIG. 5 is a flow chart illustrating a horizontal image display procedure in the method of FIG. 3;
FIG. 6 illustrates screen representations of an image displayed in a ratio-preserving mode;
FIG. 7 illustrates screen representations of an image displayed in a maximum size mode;
FIG. 8 illustrates screen representations of an image displayed in a fixed size mode;
FIG. 9 illustrates screen representations of an image displayed in a reduced/fixed size mode; and
FIG. 10 is a flow chart illustrating a second horizontal image display method according to another embodiment of the present invention.

### DETAILED DESCRIPTION OF PREFERRED EMBODIMENTS

Hereinafter, preferred embodiments of the present invention are described in detail with reference to the accompanying drawings. The same reference symbols identify the same or corresponding elements in the drawings. Detailed descriptions of constructions or processes known in the art may be omitted to avoid obscuring the invention in unnecessary detail.

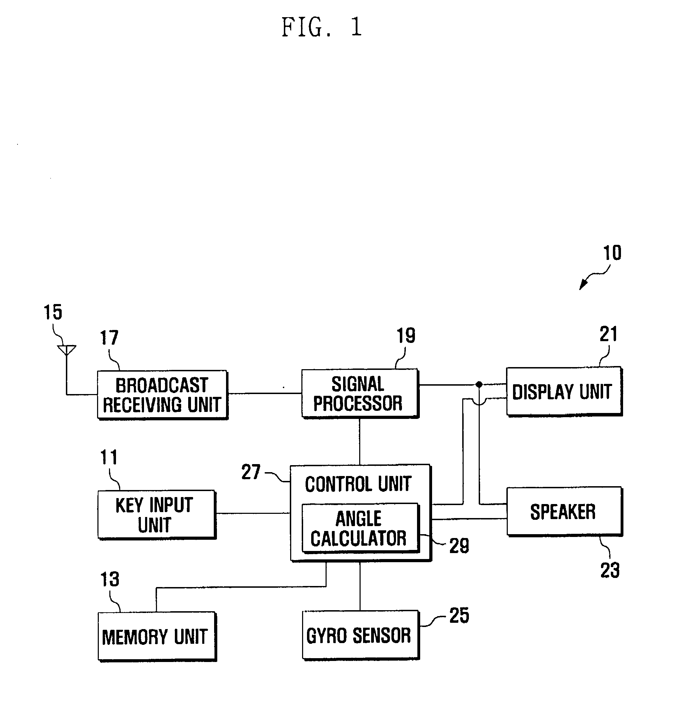

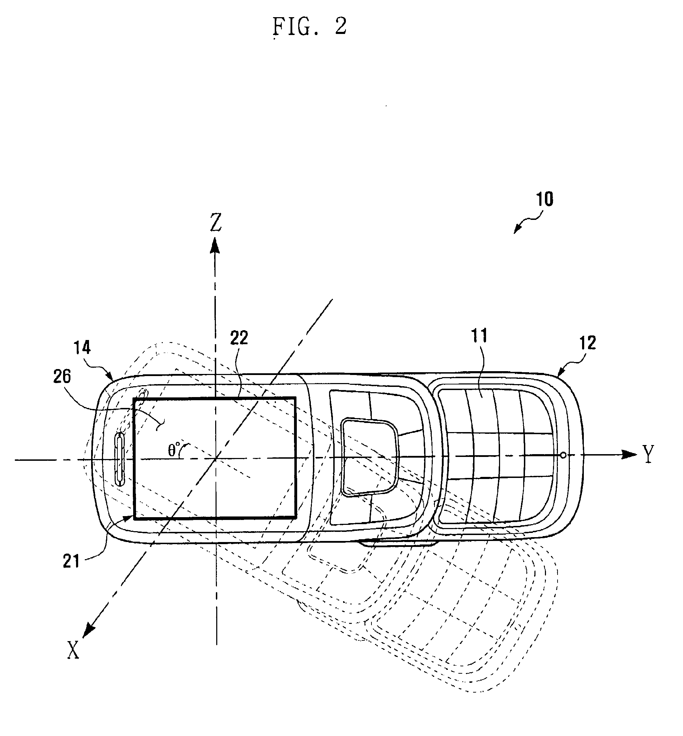

FIG. 1 illustrates a configuration of a portable terminal capable of digital broadcast reception according to the present invention. FIG. 2 shows a front view of the portable terminal of FIG. 1.

Referring to FIGS. 1 and 2, the portable terminal 10 includes a key input unit 11, a memory unit 13, a broadcast receiving unit 17, a signal processor 19, a display unit 21, a speaker 23, a gyro sensor 25, and a control unit 27 including an angle calculator 29.

The key input unit 11 includes a plurality of keys for controlling operations of the portable terminal 10, and sends a key signal associated with a key input by the user to the control unit 27. User commands through the key input unit 11 are related to digital broadcast reception, display mode setting, and horizontal image display.

The memory unit 13 stores control programs of the portable terminal 10, and data resulting from execution of the control programs. The memory unit 13 stores a program for controlling operations related to digital broadcast reception, display mode setting, and horizontal image display.

The broadcast receiving unit 17 receives a digital broadcast signal through an antenna 15. The signal processor 19 processes the received digital broadcast signal into video and audio data. The display unit 21 displays the video data from the signal processor 19 on a screen 22 (shown in FIG. 2), and reproduces the audio data through the speaker 23.

The gyro sensor 25 measures the angular velocity of the screen 22 due to rotation of the portable terminal 10, and sends the measured angular velocity to the angle calculator 29 of control unit 27.

The control unit 27 controls the overall operation of the portable terminal 10. The control unit 27 controls operations related to digital broadcast reception, display mode setting, and horizontal image display.

In particular, the angle calculator 29 computes a rotated angle θ of the screen 22 relative to the ground using the angular velocity data from the gyro sensor 25, and sends the computed rotated angle θ to the signal processor 19. The signal processor 19 rotates a video image through -θ degrees, and outputs the rotated video image to the display unit 21 for display on the screen 22. In the following description, the term 'on-screen image' refers to a portion of video data from the signal processor 19 that is displayed on the screen 22. An on-screen image is denoted by reference numeral 26. The signal processor 19 may rotate video images continuously, or in steps of preset degrees, according to rotation of the screen 22. For an on-screen image 26, the signal processor 19 processes and outputs a video image so that the center of the output video image coincides with that of the screen 22.

Therefore, on-screen images 26 are displayed parallel to the ground on the screen 22 regardless of rotated angles of the screen 22 relative to the ground.

The gyro sensor 25 measures angular velocity. When the portable terminal 10 rotates, a Coriolis force is generated in a direction perpendicular to the direction of the velocity. The gyro sensor 25 measures the angular velocity of the screen 22 using this Coriolis effect. The angle calculator 29 integrates the measured angular velocity to produce a rotated angle θ.

As illustrated in FIG. 2, the portable terminal 10 can preferably be realized as a slide type portable terminal. The portable terminal 10 includes a main body 12, and a cover 14 slidably coupled to the main body 12. The cover 14 is slidable along the front of the main body 12. The display unit 21 is installed on the cover 14 so that the screen 22 can be placed on the front of the cover 14. The screen 22 is rectangular. The key input unit 11 is installed on the front of the main body 12, and is exposed or hidden according to sliding movement of the cover 14. Although not shown, the components in FIG. 1 except for the display unit 21 are installed in the main body 12. Although the portable terminal 10 is realized as a slide type portable terminal, it may also be realized as a bar type, flip type, or folder type portable terminal.

In FIG. 2, an XYZ coordinate system is defined to measure the angular velocity. The origin of the coordinate system corresponds to the center of the screen 22. The Y-axis is parallel to the ground, and Z-axis is perpendicular to the ground. The rotated angle θ denotes an angle between a longer side of the screen 22 and the XY plane, when rotated around the X-axis on the YZ plane. The rotated angle θ is positive when the screen 22 rotates clockwise on the YZ plane, and is negative when the screen 22 rotates counterclockwise on the YZ plane. Thus the rotated angle θ is between -180° and 180° (both inclusive).

The rotated angle θ of the screen 22 is defined to be 0° when the portable terminal 10 is on the YZ plane; the cover 14 is open; the key input unit 11 of the main body 12 is on the right-hand side and the display unit 21 is on the left-hand side; and the longer sides of the screen 22 are parallel to the ground in the Y-axis direction, and the shorter sides of the screen 22 are perpendicular to the ground in the Z-axis direction. In the case when the portable terminal 10 rotates around the Y-axis or Z-axis, because the longer sides of the screen 22 are parallel to the ground, on-screen images 26 are the same. In the present embodiment, to display on-screen images 26 parallel to the ground on the screen 22, the rotated angle θ of the screen 22 from the X-axis is computed using the gyro sensor 25.

When the rotated angle θ is 0° or 180°, the image size is maximum because of the correspondence between the longer sides of the screen 22 and the longer sides of video images to be displayed.

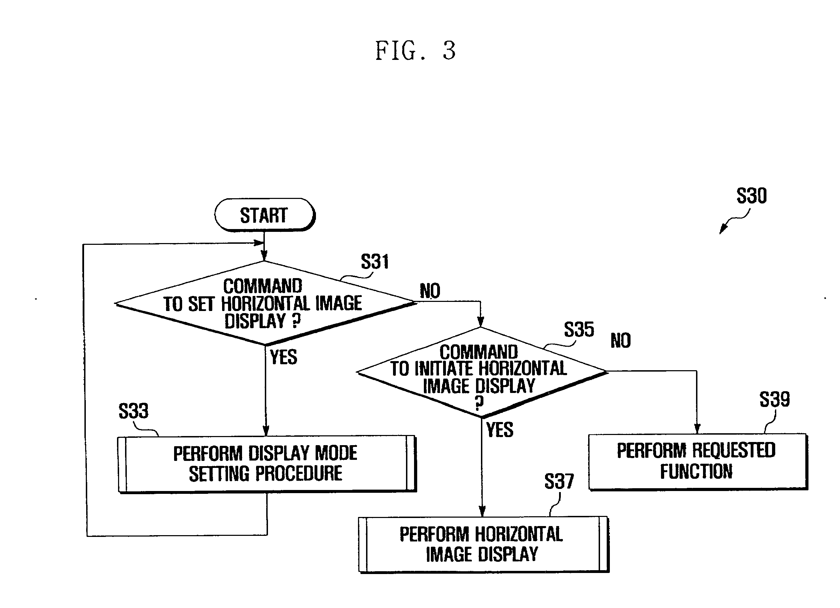

FIG. 3 is a flow chart illustrating a first horizontal image display method according to another embodiment of the present invention. Referring to FIGS. 1 to 3, the method is described as follows.

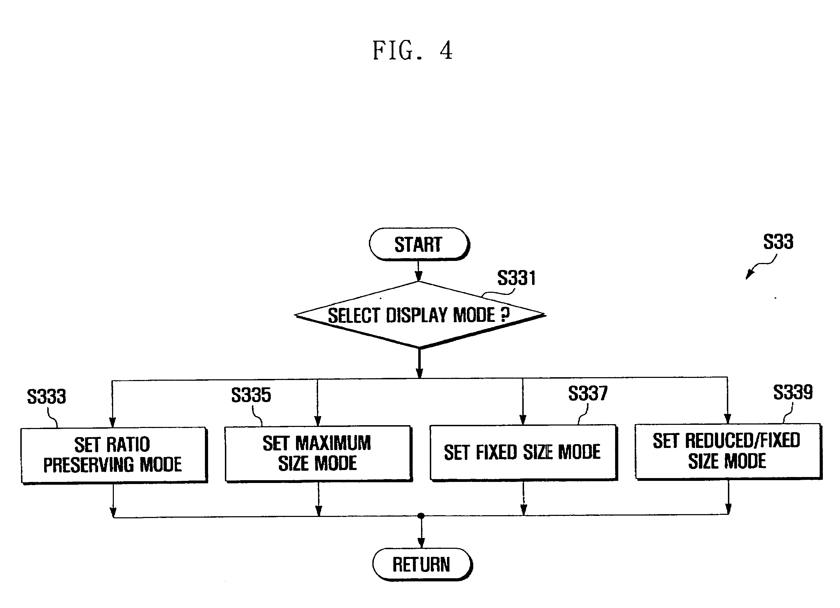

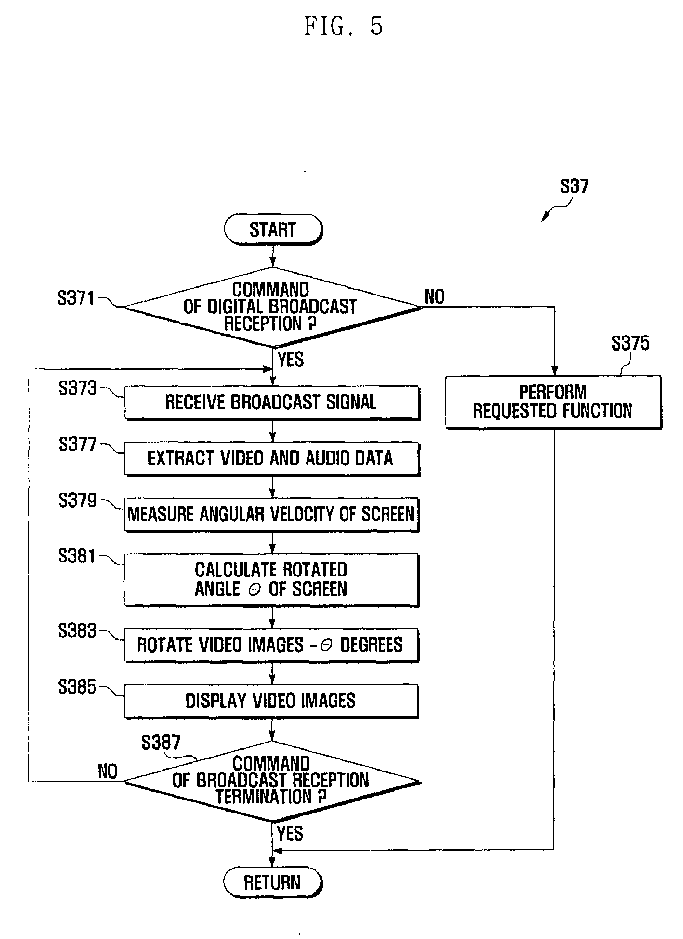

When a user enters a command at step S31, if the command is to set a horizontal image display feature, the control unit 27 performs a display mode setting procedure at step S33 (described in connection with FIG. 4). If the command is not to set a horizontal image display feature, the control unit 27 determines whether the command is to initiate the horizontal image display feature in step S35. If the command is to initiate the horizontal image display feature, the control unit 27 performs horizontal image display in step S37 (described in connection with FIG. 5). If the command is not to initiate horizontal image display, the control unit 27 performs a requested function in step S39. At step S39, the portable terminal 10 may display received digital broadcasts on the screen 22 in a conventional manner.

FIG. 4 is a flow chart illustrating the display mode setting procedure (step S33) in the method of FIG. 3. Referring to FIGS. 1 to 4, the display mode setting procedure is described as follows.

The control unit 27 determines the display mode selected by the user through the key input unit 11 in step S331.

The user can select one of a ratio preserving mode, maximum size mode, fixed size mode, and reduced/fixed size mode. The control unit 27 sets the selected display mode (S333, S335, S337 or S339).

When the rotated angle θ is 0°, +180° or -180°, a video image is displayed on the screen 22 in the maximum size. That is, an on-screen image 26 completely fills the screen 22, and corresponds to the video image from the signal processor 19.

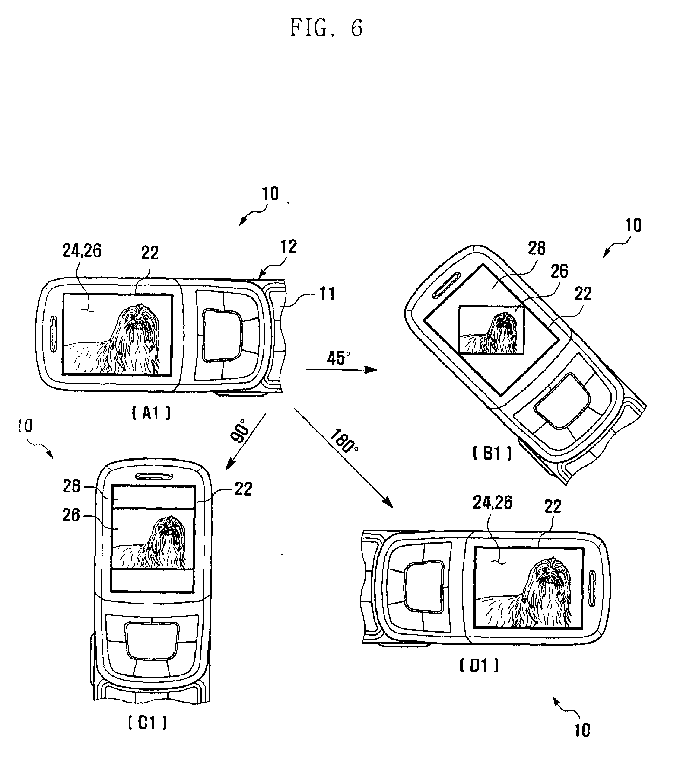

In the ratio preserving mode of step S333 (illustrated in FIG. 6), a video image is displayed parallel to the ground on the screen 22 while preserving the width-to-height ratio of the video image from the signal processor 19. Preferably, the on-screen image 26 is made as large as possible.

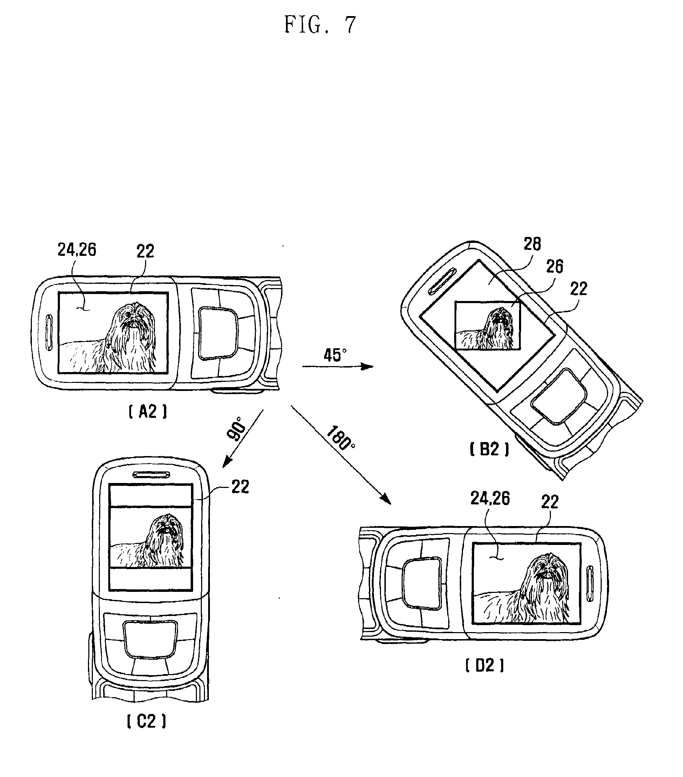

In the maximum size mode of step S335 (illustrated in FIG. 7), a video image is displayed as large as possible within a rectangular area on the screen 22. When the rotated angle θ is 0°, ±90° or ±180°, an on-screen image 26 completely fills the screen 22. When the rotated angle θ is 90° or -90°, a video image may be enlarged in the shorter side direction to form a corresponding rotated on-screen image 26.

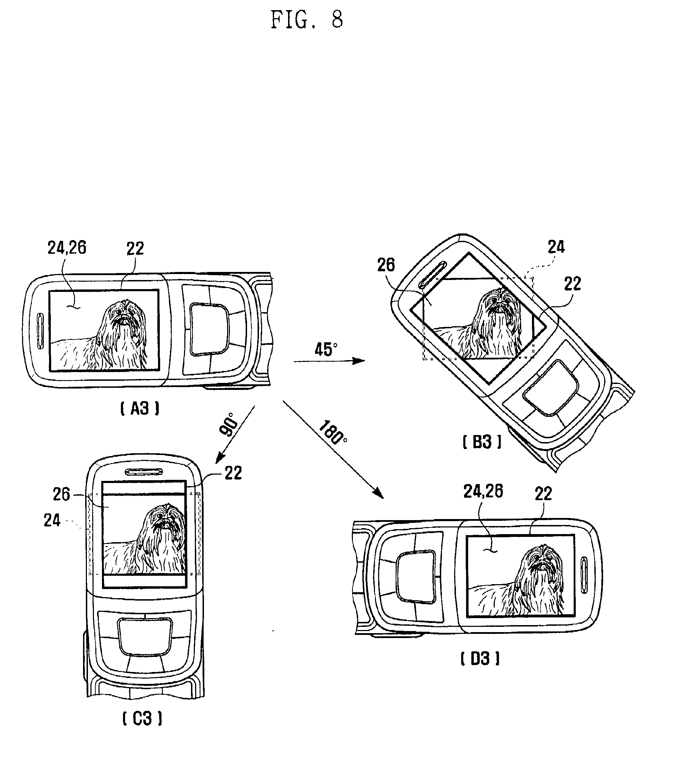

In the fixed size mode of step S337 (illustrated in FIG. 8), a video image is displayed parallel to the ground on the screen 22 in a non-reduced form while cutting off a portion of the video image that does not fit within the screen 22. When the rotated angle θ is between 0° and ±180° (both exclusive), a partly cut video image is displayed on the screen 22.

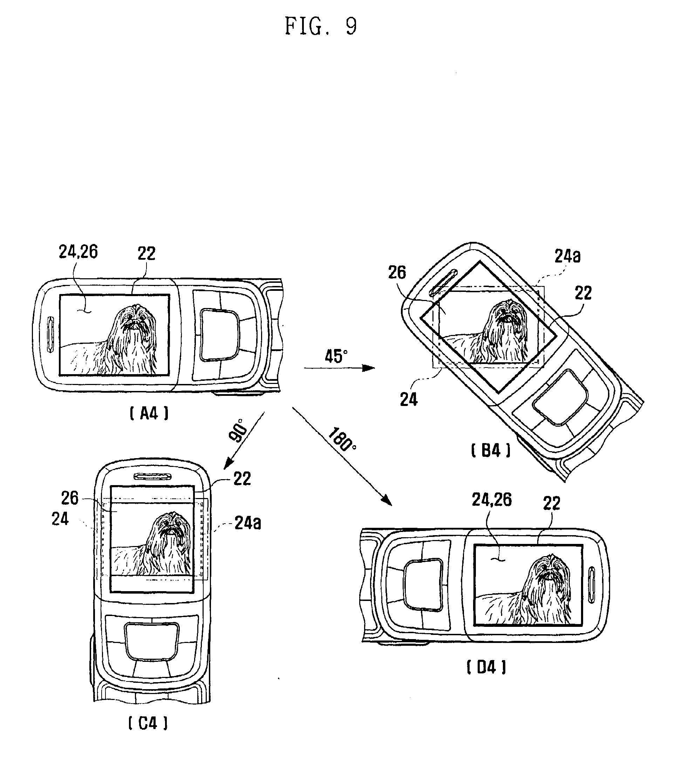

In the reduced/fixed size mode of step S339 (illustrated in FIG. 9), a video image is reduced at a preset ratio and displayed parallel to the ground on the screen 22 while cutting off a portion of the reduced video image that does not fit within the screen 22. The cut-off portion of a video image is decreased in comparison to the fixed size mode.

Video images may be displayed in various manners in addition to the display modes described above. In the above description, video images are displayed parallel to the ground in a continuously rotated manner according to the rotation of the screen 22. Video images may also be displayed parallel to the ground while being rotated in steps of preset degrees of rotation. For example, video images can be rotated once every ±45° rotation of the screen 22.

FIG. 5 is a flow chart illustrating the horizontal image display procedure (step S37) in the method of FIG. 3. Referring to FIGS. 1 to 3 and 5, the horizontal image display procedure is described as follows.

The control unit 27 determines whether a command input from the key input unit 11 is a command of digital broadcast reception in step S371. If a command of digital broadcast reception is input, the control unit 27 controls the broadcast receiving unit 17 to receive a digital broadcast signal via the antenna 15 in step S373. If a command is not a command of digital broadcast reception, the control unit 27 performs a requested function in step S375.

The signal processor 19 processes the received digital broadcast signal to extract a video image and audio data in step S377.

The gyro sensor 25 measures the angular velocity of the screen 22 due to movement of the portable terminal 10, and sends the measured angular velocity to the angle calculator 29 in step S379. The angle calculator 29 calculates the rotated angle θ of the screen 22 using the measured angular velocity, and sends the calculated rotated angle θ to the signal processor 19 in step S381.

The signal processor 19 rotates the extracted video image -θ degrees in step S383, and outputs the rotated video image to the display unit 21 for display on the screen 22 in step S385. Thereby the on-screen image 26 is parallel to the ground. At this time, the audio data is also reproduced through the speaker 23.

The control unit 27 determines whether a broadcast reception termination command is input from the key input unit 11 in step S387. If a broadcast reception termination command is not input, the control unit 27 returns to step S373 for continued digital broadcast reception.

Accordingly, the user can view a digital broadcast displayed parallel to the ground without regard to the location of the portable terminal 10 in space.

On-screen images 26 are illustrated in FIGS. 6 to 9 according to display modes, wherein the portable terminal 10 rotates clockwise on the YZ plane.

In FIG. 6, the display mode is the ratio preserving mode. When the rotated angle θ of the screen 22 is 0° (FIG. 6 (A1)) or +180° (FIG. 6 (D1)), the signal processor 19 completely fills the screen 22 with an extracted video image 24, and the on-screen image 26 corresponds to the extracted video image 24.

When the rotated angle θ is +45° (FIG. 6 (B1)), the on-screen image 26 corresponds to the extracted video image 24 that is rotated -45°. When the rotated angle θ is +90° (FIG. 6 (C1)), the on-screen image 26 corresponds to the extracted video image 24 that is rotated -90°. The signal processor 19 reduces the extracted video image 24 while preserving the width-to-height ratio, and displays the reduced video image 24 parallel to the ground on the screen 22. As illustrated in FIG. 6 (B1) and (C1), when the rotated angle θ is between 0° and +180° (both exclusive), the on-screen image 26 is a reduced form of the extracted video image 24 at a particular reduction ratio. Thus, an empty area 28 not filled with the on-screen image 26 is present on the screen 22.

Accordingly, a right-handed user can hold the key input unit 11 of the main body 12 with the right hand, with the screen 22 at the left side of the terminal 10, to view on-screen images 26 on the screen 22 (FIG. 6 (A1)). A left-handed user can hold the key input unit 11 of the main body 12 with the left hand, with the screen 22 at the right side of the terminal 10, to view on-screen images 26 on the screen 22 (FIG. 6 (D1)).

In FIG. 7, the display mode is the maximum size mode, in which video images are displayed, parallel to the ground, as large as possible within a rectangular area on the screen 22. When the rotated angle θ is 0° (FIG. 7 (A2)), +90° (FIG. 7 (C2)) or +180° (FIG. 7 (D2)), an extracted video image 24 completely fills the screen 22. When the rotated angle θ is 90° or -90°, a video image may be enlarged in the shorter side direction. When the rotated angle θ is +45° (FIG. 7 (B2)), a reduced extracted video image 24 is displayed as large as possible within a rectangular area on the screen 22. When the rotated angle θ is between 0° and +90° (both exclusive), an empty area 28 not filled with the on-screen image 26 is present on the screen 22.

In FIG. 8, the display mode is the fixed size mode, in which an extracted video image 24 processed by the signal processor 19 is displayed parallel to the ground on the screen 22 in a non-reduced form while cutting off a portion of the video image 24 that does not fit within the screen 22. That is, when the rotated angle θ is between 0° and +180° (both exclusive), the on-screen image 26 corresponds to the extracted video image 24 with a portion not fitting within the screen 22 cut off, as illustrated in FIG. 8 (B3) and (C3). When the rotated angle θ is between 0° and +90° (both exclusive), the on-screen image 26 corresponds to the extracted video image 24 whose four corners are cut off, as illustrated in FIG. 8 (B3). When the rotated angle θ is +90° (FIG. 8 (C3)), the on-screen image 26 corresponds to the extracted video image 24 whose opposite longer side ends are cut off.

In FIG. 9, the display mode is the reduced/fixed size mode. When the rotated angle θ is between 0° and +180° (both exclusive), an extracted video image 24 by the signal processor 19 is reduced at a preset ratio and displayed parallel to the ground on the screen 22 while cutting off a portion of the reduced video image that does not fit within the screen 22, as illustrated in FIG. 9 (B4) and (C4).

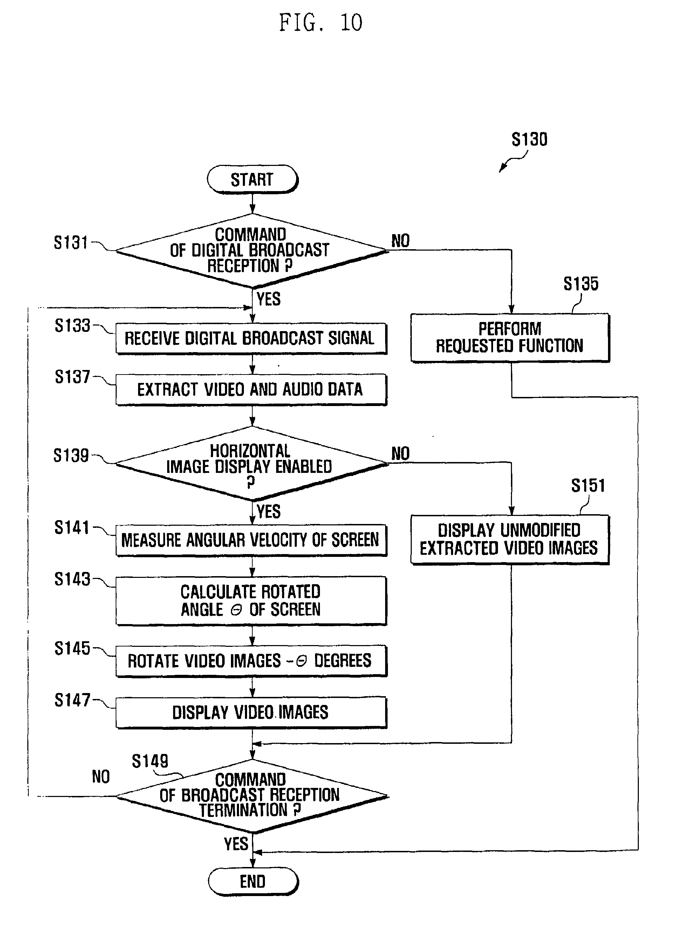

FIG. 10 is a flow chart illustrating a second horizontal image display method according to another embodiment of the present invention. Referring to FIGS. 1, 2 and 10, the method is described as follows.

The control unit 27 determines whether a command input by a user through the key input unit 11 is a command of digital broadcast reception in step S131. If a command of digital broadcast reception is input, the control unit 27 controls the broadcast receiving unit 17 to receive a digital broadcast signal via the antenna 15 in step S133. If a command is not a command of digital broadcast reception, the control unit 27 performs a requested function in step S135.

The signal processor 19 processes the received digital broadcast signal to extract a video image and audio data in step S137.

The control unit 27 determines whether a horizontal image display feature is enabled in step S139. If a horizontal image display feature is enabled, the control unit 27 controls the gyro sensor 25 to measure the angular velocity of the screen 22 due to movement of the portable terminal 10, and to send the measured angular velocity to the angle calculator 29 in step S141. The angle calculator 29 calculates the rotated angle θ of the screen 22 using the measured angular velocity, and sends the calculated rotated angle θ to the signal processor 19 in step S143.

The signal processor 19 rotates the extracted video image -θ degrees in step S145, and outputs the rotated video image to the display unit 21 for display on the screen 22 in step S147. Thereby, the on-screen image 26 is parallel to the ground. At this time, the audio data is also reproduced through the speaker 23.

If a horizontal image display feature is not enabled at step S139, the control unit 27 displays the extracted video image on the screen 22 without modification in step S151.

The control unit 27 determines whether a broadcast reception termination command is input from the key input unit 11 in step S149. If a broadcast reception termination command is not input, the control unit 27 returns to step S133 for continued digital broadcast reception.

As apparent from the above description, the present invention provides a portable terminal capable of digital broadcast reception and a horizontal image display method that enable video images in digital broadcasts to be displayed parallel to the ground without regard to rotated angles of a display screen. As a result, both right-handed and left-handed users can conveniently view digital broadcasts with identical portable terminals. In addition, because digital broadcasts can be viewed horizontally at any angle by rotating the portable terminal itself, the portable terminal does not require a physical rotating mechanism like that of a conventional swing type portable terminal. Further, in a slide type or folder type portable terminal, the user can view a digital broadcast with a cover or folder open, in a state where shorter sides of the display screen are parallel to the ground, and immediately use another function during or after viewing of the digital broadcast.

While preferred embodiments of the present invention have been shown and described in this specification, it will be understood by those skilled in the art that various changes or modifications of the embodiments are possible without departing from the spirit and scope of the invention as defined by the appended claims.

## Claims

1. A horizontal image display method for a portable terminal capable of digital broadcast reception, comprising:
receiving a digital broadcast signal and extracting a video image from the received digital broadcast signal; and
displaying the extracted video image parallel to the ground on a screen without regard to an attitude of the screen relative to the ground.

2. The horizontal image display method of claim 1, wherein the displaying step comprises:
calculating a rotated angle θ of the screen relative to the ground; and
rotating the extracted video image through -θ and displaying the rotated video image on the screen as an on-screen image.

3. The horizontal image display method of claim 2, wherein in the calculating step the rotated angle θ of the screen is calculated using angular velocity data of the screen measured by a gyro sensor.

4. The horizontal image display method of claim 3, wherein the on-screen image has a width-to-height ratio equal to that of the extracted video image.

5. The horizontal image display method of claim 4, wherein the on-screen image is made as large as possible within the screen.

6. The horizontal image display method of claim 3, wherein the on-screen image is made as large as possible within a rectangular area on the screen.

7. The horizontal image display method of claim 3, wherein the on-screen image corresponds to an unreduced form of the extracted video image and a portion not fitting within the screen is cut off.

8. The horizontal image display method of claim 3, wherein the on-screen image corresponds to a reduced form of the extracted video image reduced at a preset ratio and a portion of the reduced form not fitting within the screen is cut off.

9. The horizontal image display method of claim 7, wherein a center of the extracted video image coincides with a center of the screen.

10. The horizontal image display method of Claim 8, wherein a center of the extracted video image coincides with a center of the screen.

11. A horizontal image display method for a portable terminal capable of digital broadcast reception, comprising:
receiving a digital broadcast signal and extracting a video image from the received digital broadcast signal;
determining whether a horizontal image display feature is enabled;
calculating, if the horizontal image display feature is enabled, a rotated angle θ of a screen relative to the ground; and
rotating the extracted video image through -θ and displaying the rotated video image on the screen as an on-screen image.

12. The horizontal image display method of claim 11, further comprising displaying, if the horizontal image display feature is not enabled, the extracted video image on the screen without modification.

13. The horizontal image display method of claim 12, wherein in the calculating step the rotated angle θ of the screen is calculated using angular velocity data of the screen measured by a gyro sensor.

14. The horizontal image display method of claim 13, wherein when longer sides of the rectangular screen are parallel to the ground, the on-screen image completely fills the screen.

15. The horizontal image display method of claim 13, wherein when shorter sides of the screen are parallel to the ground, the on-screen image corresponds to a reduced form of the extracted video image with preservation of a width-to-height ratio of the extracted video image that is made as large as possible within the screen.

16. A portable terminal capable of digital broadcast reception, comprising:
a display unit having a screen for displaying images;
a broadcast receiving unit for receiving a digital broadcast signal;
an angle calculator for calculating a rotated angle θ of the screen relative to the ground;
a signal processor for extracting a video image from the received digital broadcast signal, rotating the extracted video image through -θ, and displaying the rotated video image on the screen as an on-screen image.

17. The portable terminal of claim 16, further comprising a gyro sensor for measuring an angular velocity of the screen, and wherein the angle calculator calculates the rotated angle θ using angular velocity data measured by the gyro sensor.

18. The portable terminal of claim 17, wherein the screen is rectangular.

19. The portable terminal of claim 18, wherein when longer sides of the rectangular screen are parallel to the ground, the signal processor processes the extracted video image so that the on-screen image completely fills the screen.

20. The portable terminal of claim 18, wherein when shorter sides of the screen are parallel to the ground, the signal processor reduces the extracted video image so that a width-to-height ratio is preserved and the corresponding on-screen image is as large as possible within the screen.

21. The portable terminal of claim 18, wherein the signal processor processes the extracted video image so that the on-screen image is as large as possible within a rectangular area on the screen.

22. The portable terminal of claim 18, wherein the signal processor cuts off a portion of the extracted video image not fitting within the screen so that the on-screen image corresponds to the remaining extracted video image in an unreduced form.

23. The portable terminal of claim 18, wherein the signal processor reduces the extracted video image at a preset ratio and cuts off a portion of the reduced video image not fitting within the screen.

24. The portable terminal of claim 22, wherein the signal processor makes a center of the extracted video image coincide with a center of the screen.
